# EUROPEAN PATENT APPLICATION

(11) **EP 4 443 546 A1**
(43) Date of publication of application: **09.10.2024**
(21) Application number: 22901402.2
(22) Date of filing: 01.12.2022
(51) Int. Cl.: H01M 4/139, H01M 4/04, H01M 4/36, H01M 4/62

(54) **APPARATUS FOR MANUFACTURING ELECTRODE ACTIVE MATERIAL LAYER**

(30) Priority: 03.12.2021 JP 2021197288
(71) Applicant: Zeon Corporation, Tokyo 100-8246 (JP)
(72) Inventor: FUJII, Tsutomu, Tokyo 100-8246 (JP)
(74) Representative: Maiwald GmbH
(86) International application number: PCT/JP2022/044343
(87) International publication number: WO 2023/100971

(57) **Abstract**

A production apparatus of an electrode active material layer, comprising: a support unit; a feeding unit that feeds prescribed granulated particles on or above the support unit; a first conveying unit; a squeegee device; and a rolling unit, wherein: the squeegee device includes at least one cylindrical squeegee roll, two or more stock guides that are in a plate shape and have a shaft hole, a rotation shaft that is inserted into the stock guide and that penetrates the at least one squeegee roll in an axial direction of the squeegee roll, and a fixing member that restricts movement of the stock guides in an axial direction of the rotation shaft; the stock guides and the at least one squeegee roll are alternately disposed along the axial direction of the rotation shaft, and the stock guides are disposed at both ends of the at least one squeegee roll in the axial direction one each; the at least one squeegee roll is fixed to the rotation shaft; and the rotation shaft is freely rotatable with respect to the stock guides.

## Description

### Technical Field

The present invention relates to a production apparatus of an electrode active material layer.

### Background Art

Electrode sheets, which are components of batteries such as a lithium ion rechargeable battery, can include an electrode active material layer. The electrode active material layer is usually formed on a substrate that is a current collector. As an apparatus for forming an electrode active material layer, an apparatus that deposits granulated particles containing an electrode active material as a layer on a substrate and rolls the layer of the granulated particles has been known. To uniformize the thickness of the granulated particle layer, the production apparatus of an electrode active material layer includes a squeegee device that levels the granulated particles deposited on the widthwise midsection of the granulated particle layer and guides the granulated particles to both widthwise end portions. Techniques for reducing the conveyance of the granulated particles guided to both widthwise end portions beyond the specified width of the granulated particle layer downstream in the conveyance direction of the granulated particle layer have been known (see Patent Literatures 1 to 4).

### Citation List

### Patent Literature

Patent Literature 1: Japanese Patent Application Laid-Open No. 2016-100067 A
Patent Literature 2: Japanese Patent Application Laid-Open No. 2016-115432 A
Patent Literature 3: Japanese Patent Application Laid-Open No. 2016-018682 A (Corresponding foreign publication: U.S. Patent Application Publication No. 2017/179465)
Patent Literature 4: Japanese Patent Application Laid-Open No. 2016-115569 A

### Summary of the Invention

### Technical Problem

The granulated particles that are leveled and guided to both widthwise end portions of the granulated particle layer by the squeegee device may possibly go beyond both widthwise end portions of the squeegee device and may be conveyed downstream depending on the production conditions, such as when the amount of granulated particles fed is excessive. The excess granulated particles that have been conveyed downstream can get into a rolling unit such as a rolling roll and cause defective formation of the electrode active material layer.

To remove the excess granulated particles that have been conveyed downstream, a production apparatus of Patent Literature 1 includes jigs and a dust suction device for removing both end portions of the granulated particle layers formed beyond a specific width. A production apparatus of Patent Literature 2 includes an air purge device for removing both end portions of the granulated particle layer by blowing gas.

However, as in the production apparatuses of Patent Literatures 1 and 2, when a part of the formed layer of the granulated particles is removed, a part of the granulated particles is wasted, which leads to an increase in production cost. Furthermore, due to the conveyance of the removed granulated particles downstream in the conveyance direction, the quality of the electrode active material layer to be produced may deteriorate, and a defect may occur in a member for use in production such as a rolling roll.

Production apparatuses of Patent Literatures 3 and 4 include guide members for forming areas where granulated particles are not deposited. However, these guide members may deviate from the original installation position because of vibration of the production apparatus or the like. In this case, a desired electrode active material layer may not be obtained. For example, when a guide member floats up from a surface such as a substrate to which granulated particles are fed, the granulated particles may possibly enter a gap between the guide member and the surface to which the granulated particles are fed. Thus, belt-like portions where the electrode active material layer is not formed may not be formed as desired.

Therefore, there is a demand for an apparatus for producing an electrode active material layer that can reduce the amount of granulated particles that would be wasted, and can stably form belt-like portions (electrode active material layer non-forming portions) in which the electrode active material layer is not formed.

### Solution to Problem

As a result of intensive studies to solve the above-mentioned problems, the present inventor has found that the above-mentioned problems can be solved by a production apparatus including a specific squeegee device, thereby completing the present invention.

More specifically, the present invention provides the following.
<1> A production apparatus of an electrode active material layer, comprising:
   a support unit;
   a feeding unit that feeds granulated particles on or above the support unit, the granulated particles containing an electrode active material and a binder;
   a first conveying unit that conveys the granulated particles that have been fed on or above the support unit;
   a squeegee device that levels the granulated particles which are conveyed to form a granulated particle layer; and
   a rolling unit that rolls the granulated particle layer to form an electrode active material layer,
   wherein:
      the squeegee device includes
         at least one cylindrical squeegee roll,
         two or more stock guides that are in a plate shape and have a shaft hole,
         a rotation shaft that is inserted into the shaft hole of the stock guide and that penetrates the at least one squeegee roll in an axial direction of the squeegee roll, and
         a fixing member that restricts movement of the stock guides in an axial direction of the rotation shaft;
      the stock guides and the at least one squeegee roll are alternately disposed along the axial direction of the rotation shaft, and the stock guides are disposed at both ends of the at least one squeegee roll in the axial direction one each;
      the at least one squeegee roll is fixed to the rotation shaft; and
      the rotation shaft is freely rotatable with respect to the stock guides.
<2> The production apparatus of an electrode active material layer according to <1>, wherein the number of the at least one squeegee roll included in the squeegee device is n, the number of the stock guides included in the squeegee device is (n+1), and n is 2 or more.
<3> The production apparatus of an electrode active material layer according to <1> or <2>, further comprising a second conveying unit that conveys a substrate to the rolling unit, wherein the rolling unit rolls the granulated particle layer that has been overlaid on the conveyed substrate.
<4> The production apparatus of an electrode active material layer according to <1> or <2>, further comprising a third conveying unit that conveys a substrate to the support unit, wherein
   the support unit supports the substrate, and
   the feeding unit feeds the granulated particles on the substrate that has been supported by the support unit.
<5> The production apparatus of an electrode active material layer according to <4>, wherein a distance between main surfaces of the stock guides that are disposed at both ends in a longitudinal direction of the squeegee device is larger than a width of the substrate, the main surfaces being opposite to main surfaces that face the squeegee roll.
<6> The production apparatus of an electrode active material layer according to any one of <1> to <5>, wherein a single roll serves as the support unit and the first conveying unit.
<7> The production apparatus of an electrode active material layer according to any one of <1> to <6>, wherein both end faces of the at least one squeegee roll are subjected to a low friction treatment.
<8> The production apparatus of an electrode active material layer according to any one of <1> to <7>, wherein an area of both end faces of the at least one squeegee roll is smaller than an area of a cross-section that is perpendicular to the axial direction of the squeegee roll and that passes through a center in the axial direction of the squeegee roll.
<9> The production apparatus of an electrode active material layer according to any one of <1> to <8>, wherein each of both end portions of the at least one squeegee roll has a depression.
<10> The production apparatus of an electrode active material layer according to any one of <1> to <9>, wherein a distance between main surfaces of the stock guides that are disposed at both end portions in a longitudinal direction of the squeegee device is larger than a width of the support unit, the main surfaces being opposite to main surfaces that face the squeegee roll.
<11> The production apparatus of an electrode active material layer according to any one of <1> to <10>, further comprising position measurement units fixed to the respective stock guides, a gap amount adjustment unit, and a control unit, wherein:
   each of the stock guides has a first surface facing the support unit;
   the position measurement unit is capable of measuring a distance D1 between the position measurement unit and a surface that faces the first surface of the stock guide and to which the granulated particles are fed;
   the gap amount adjustment unit adjusts a gap amount G1 between the first surface of the stock guide and the surface to which the granulated particles are fed; and
   the control unit causes the gap amount adjustment unit to adjust the gap amount G1 based on a difference between the gap amount G1 obtained based on the distance D1 and a gap amount threshold T1 that has been set to be greater than 0 µm.

### Advantageous Effects of Invention

According to the present invention, it is possible to provide a production apparatus of an electrode active material layer that can reduce the amount of granulated particles that would be wasted, and can stably form belt-like portions (electrode active material layer non-forming portions) in which the electrode active material layer is not formed.

### Brief Description of Drawings

FIG. 1 is a schematic diagram illustrating a production apparatus of an electrode active material layer according to a first embodiment.
FIG. 2 is a front view schematically illustrating an example of a squeegee device included in the production apparatus.
FIG. 3 is a perspective view schematically illustrating an example of a squeegee roll included in the squeegee device.
FIG. 4 is a cross-sectional view schematically illustrating an example of a squeegee roll.
FIG. 5 is a perspective view schematically illustrating an example of a stock guide.
FIG. 6 is a perspective view schematically illustrating an example of a rotation shaft.
FIG. 7 is a schematic diagram illustrating a part of the production apparatus according to the first embodiment.
FIG. 8 is a schematic diagram illustrating a configuration of a control unit of the production apparatus according to the first embodiment.
FIG. 9 is a flowchart for describing processing performed by the control unit according to the first embodiment.
FIG. 10 is a front view schematically illustrating a squeegee device according to a modification of the first embodiment.
FIG. 11 is a schematic diagram illustrating a production apparatus of an electrode active material layer according to a second embodiment.
FIG. 12 is a schematic diagram illustrating a production apparatus of an electrode active material layer according to a third embodiment.
FIG. 13 is a front view schematically illustrating a squeegee device according to the third embodiment.
FIG. 14 is a perspective view schematically illustrating an example of a stock guide included in the squeegee device according to the third embodiment.
FIG. 15 is a schematic diagram illustrating a production apparatus according to a modification of the third embodiment.

### Description of Embodiments

Hereinafter, the present invention will be described in detail with reference to embodiments and examples. However, the present invention is not limited to embodiments and examples described below, and may be freely modified for implementation without departing from the scope of claims of the present invention and the scope of their equivalents. Components of embodiments described below may be combined as appropriate. In the drawings, the same components are denoted by the same reference numerals, and descriptions thereof may be omitted.

In the following description, a "long-length" film refers to a film with the length that is 5 times or more the width of the film, and preferably a film with the length that is 10 times or more the width thereof, and specifically refers to a film having a length that allows a film to be wound up into a rolled shape for storage or transportation. The upper limit of the length of a film relative to the width of the film may be, but not particularly limited to, for example, 100,000 times or less the width.

In the following description, a direction of an element being "parallel", "perpendicular" or "orthogonal" may allow an error within the range of not impairing the advantageous effects of the present invention, for example, within a range of ±3°, ±2°, or ±1° unless otherwise specified.

In the following description, the term "on" or "above" an element includes a case where an object is directly in contact with the element and a case where an object is indirectly in contact with the element.

An electrode active material layer produced by the production apparatus according to an embodiment of the present invention is obtained by rolling a layer of granulated particles. Such an electrode active material layer is preferably formed on a substrate. The substrate is preferably a long-length material.

Examples of the substrate may include: metal foils formed of aluminum, platinum, nickel, tantalum, titanium, stainless steel, copper, and other alloys; films containing electroconductive materials (e.g., carbon, electroconductive macromolecular materials); paper; fabric cloths formed of natural fibers, synthetic fibers, and the like; and resin films containing polymers. Examples of the polymers that can be contained in the resin films may include a polyester such as polyethylene terephthalate and polyethylene naphthalate; a polyimide; a polypropylene; a polyphenylene sulfide; a polyvinyl chloride; an aramid; PEN; and PEEK. Such materials can be selected as appropriate depending on the intended purposes.

Among these, the preferable substrate may be a metal foil, a film containing a carbon material, and a film containing an electroconductive macromolecular material, more preferably a metal foil, and still more preferably a copper foil, an aluminum foil, and an aluminum alloy foil from the viewpoint of electroconductivity and withstand voltage. Such substrates are suitable for the production of electrode sheets for lithium ion batteries.

The substrate may be subjected to a surface treatment such as a coating film treatment, a punching process, a buffing process, a sand blasting process, or an etching process, or may be subjected to multiple surface treatments.

The thickness of the substrate is not particularly limited. The thickness is preferably 1 µm or more, and more preferably 5 µm or more, and is preferably 1000 µm or less, and more preferably 800 µm or less. The substrate may have any given width.

The granulated particles usually contain an electrode active material and a binder, and, as necessary, may contain optional components such as a dispersant, an electroconductive material, an additive, and the like.

The electrode active material contained in the granulated particles may be a positive electrode active material or a negative electrode active material. Examples of the positive electrode active material and the negative electrode active material may include materials that can be used as an electrode active material for lithium ion batteries. Examples of the positive electrode active material may include a metal oxide that can be reversibly doped and undoped with lithium ions. Examples of such metal oxides may include lithium cobalt oxide (LiCoO₂), lithium nickel oxide (LiNiO₂), lithium manganese oxide (LiMn₂O₄), lithium iron phosphate (LiFeO₄), and ternary active materials obtained by substituting nickel and manganese for a part of lithium cobalt oxide (for example, LiCo_{1/3}Ni_{1/3}Mn_{1/3}O₂). As the positive electrode active material, one type thereof may be solely used, and two or more types thereof may also be used in combination.

Examples of the negative electrode active material may include low crystallizable carbons (amorphous carbon) (e.g., easily graphitizable carbon, non-graphitizable carbon, and pyrolytic carbon); graphite (e.g., natural graphite and synthetic graphite); alloy-based materials containing tin, silicon, and the like; and oxides (e.g., silicon oxide, tin oxide, and lithium titanate). As the negative electrode active material, one type thereof may be solely used, and two or more types thereof may also be used in combination.

The electrode active material is preferably in a granular form. With the granular particle form, the electrode active material can be shaped into a high-density electrode.

The volume-average particle diameter (D50) of the electrode active material is preferably 0.1 µm or more and 100 µm or less, more preferably 0.3 µm or more and 50 µm or less, and still more preferably 0.5 µm or more and 30 µm or less. When the volume-average particle diameter (D50) of the electrode active material falls within the above-described range, the electrode active material can be suitably used as a material for a lithium ion battery electrode.

The binder contained in the granulated particles is preferably a compound capable of binding the electrode active materials to each other. The binder is more preferably a dispersive binder having a property of dispersing when in a solvent. Examples of the dispersible binder may include macromolecular compounds such as a silicon atom-containing polymer, a fluorine atom-containing polymer, a conjugated diene-based polymer, an acrylate-based polymer, a polyimide, a polyamide, and a polyurethane.

The shape of the dispersive binder is not particularly limited, and is preferably particulate. A particulate dispersive binder can improve the binding property and can reduce a drop in the capacity of the produced electrode and the deterioration of the produced electrode due to repetitive charging and discharging. Examples of the particulate binder may include an aqueous dispersion of binder particles such as latex, and a particulate binder obtained by drying such an aqueous dispersion.

The amount of the binder, based on dry weight, is preferably 0.1 part by weight or more and 50 parts by weight or less, more preferably 0.5 part by weight or more and 20 parts by weight or less, and still more preferably 1 part by weight or more and 15 parts by weight or less, relative to 100 parts by weight of the electrode active material, from the viewpoint of sufficiently ensuring adhesion between the obtained electrode active material layer and the substrate and reducing the internal resistance.

The granulated particles may contain a dispersant as an optional component. Examples of the dispersant may include cellulosic polymers such as carboxymethylcellulose and methylcellulose, and ammonium or alkali metal salts thereof. As these dispersants, one type thereof may be solely used, and two or more types thereof may also be used in combination.

The granulated particles may contain an electroconductive material as an optional component. Examples of the electroconductive material may include electroconductive carbon blacks such as furnace black, acetylene black, and Ketjen black (registered trademark of Akzo Nobel Chemicals B.V.), with acetylene black and Ketjen black being preferable. Vapor-grown carbon fibers such as VGCF (registered trademark) and carbon nanotubes; graphite-based carbon materials such as expanded graphite and graphite; and graphene can also be used as the electroconductive material. As these electroconductive materials, one type thereof may be solely used, and two or more types thereof may also be used in combination.

The granulated particles can be produced by granulating the electrode active material and the binder, and optional components that may be included as necessary. Examples of the method for producing the granulated particles may include, but are not limited to, known granulation methods such as a fluidized bed granulation method, a spray drying granulation method, and a tumbling bed granulation method.

Each of the granulated particles is preferably in the form of a secondary particle formed by aggregation of a plurality of primary particles.

Specifically, each of the granulated particles is preferably a secondary particle formed by binding a plurality (preferably several to several tens) of the electrode active material and optional components with the binder.

The volume-average particle diameter (D50) of the granulated particles is preferably 0.1 µm or more, more preferably 1 µm or more, still more preferably 20 µm or more, and further more preferably 30 µm or more, and is preferably 1000 µm or less, more preferably 500 µm or less, and still more preferably 250 µm or less, from the viewpoint of easily obtaining an electrode active material layer having a desired thickness.

The volume-average particle diameter (D50) of the granulated particles is a 50% volume-average particle diameter measured in a dry manner and calculated using a laser scattering and diffraction-based particle size distribution measurement device (e.g., Microtrac MT3300EX II; manufactured by MicrotracBEL Corp.). The 50% volume-average particle diameter is the particle diameter at a point where the cumulative frequency accumulated from the smaller diameter side on the obtained particle size distribution (volume basis) reaches 50%.

The number-average particle diameter of the granulated particles to be described later is a particle diameter measured in a dry manner and calculated using a laser scattering and diffraction-based particle size distribution measurement device (e.g., Microtrac MT3300EX II; manufactured by MicrotracBEL Corp.). For example, a 50% number-average particle diameter (D50) is the particle diameter at a point where the cumulative frequency accumulated from the smaller diameter side on the obtained particle size distribution (number basis) reaches 50%.

### <1. First embodiment>

A production apparatus of an electrode active material layer according to a first embodiment will be described below with reference to the drawings.

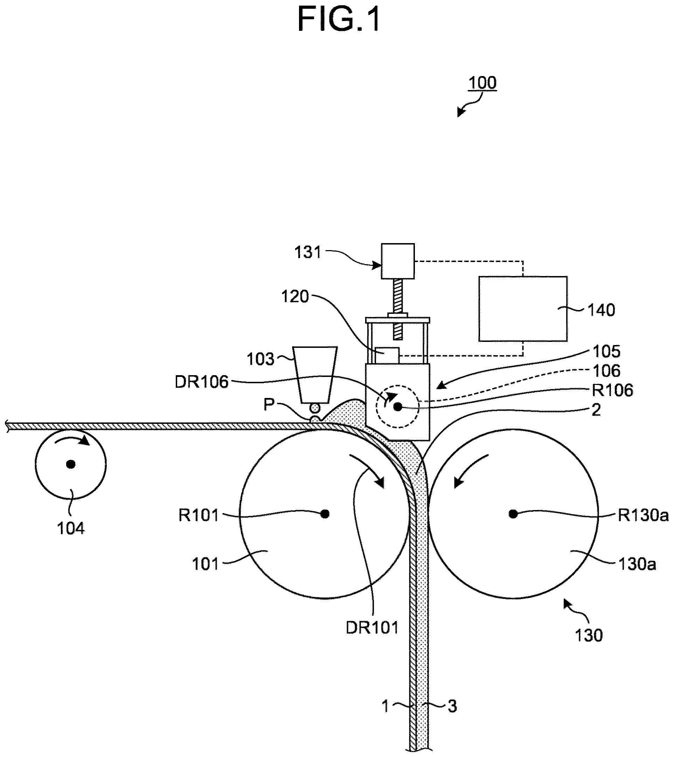

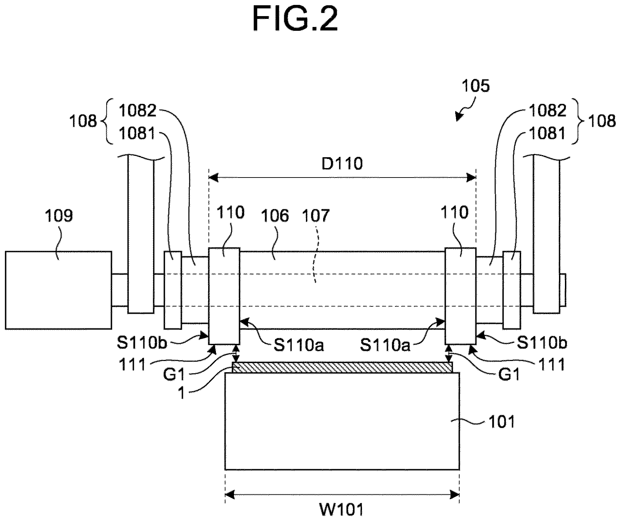

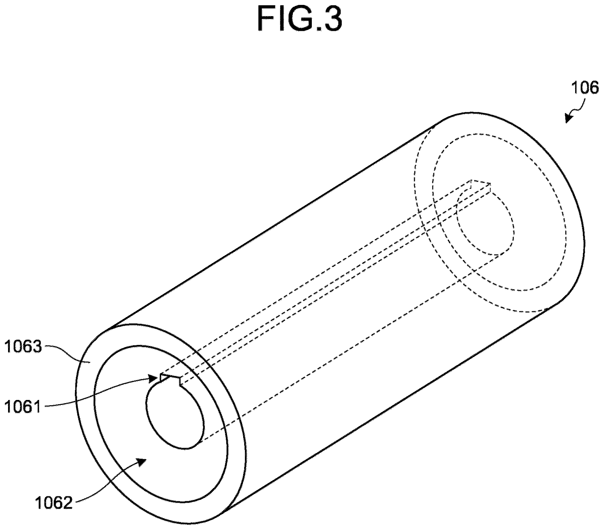

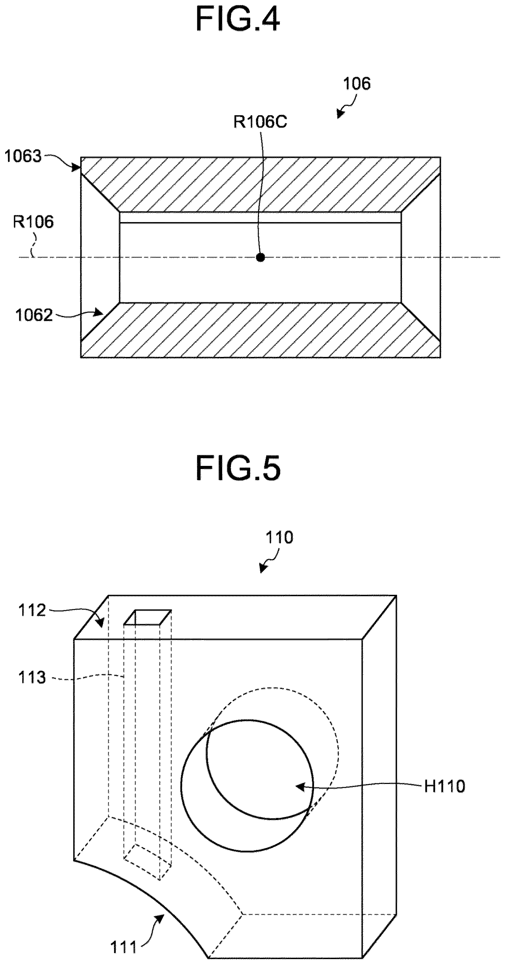

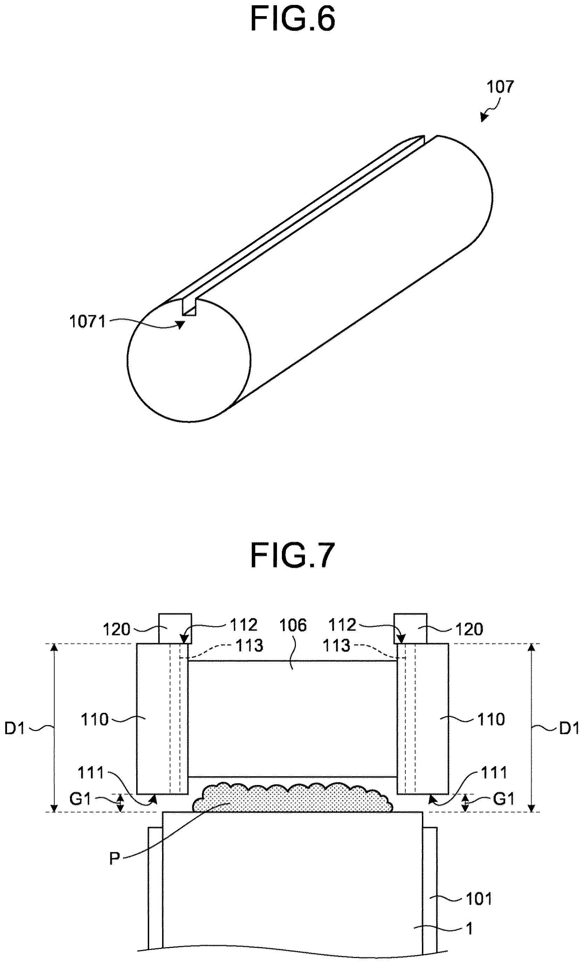

FIG. 1 is a schematic diagram illustrating the production apparatus of an electrode active material layer according to the first embodiment. FIG. 2 is a front view schematically illustrating an example of a squeegee device included in the production apparatus. FIG. 3 is a perspective view schematically illustrating an example of a squeegee roll included in the squeegee device. FIG. 4 is a cross-sectional view schematically illustrating an example of a squeegee roll. FIG. 4 shows a cut plane including the axial direction of the squeegee roll. FIG. 5 is a perspective view schematically illustrating an example of a stock guide. FIG. 6 is a perspective view schematically illustrating an example of a rotation shaft. FIG. 7 is a schematic diagram illustrating a part of the production apparatus according to the first embodiment.

As illustrated in FIG. 1, a production apparatus 100 according to the present embodiment includes a forming roll 101, a feeding unit 103, a third conveying unit 104, a squeegee device 105, position measurement units 120, a rolling roll 130a, a gap amount adjustment unit 131, and a control unit 140. The forming roll 101 functions as a support unit, as a first conveying unit, and as a rolling unit 130 together with the rolling roll 130a.

The forming roll 101 is a cylindrical member, and is supported to be rotatable about an axis R101 in a direction DR101. The third conveying unit 104 conveys the substrate 1 to the forming roll 101, which serves as a support unit, and the forming roll 101 conveys the substrate 1 downstream while rotating in the direction DR101. The third conveying unit 104 is, for example, a conveying roll.

The feeding unit 103 feeds the granulated particles P, onto a main surface of the substrate 1 supported by the forming roll 101 and above the forming roll 101. An optional powder feeding device may be used as the feeding unit 103. Examples of the powder feeding mechanism may include a pressure-feeding type, a rotary vane type, a screw type, and a rotary drum type.

The feeding unit 103 of the present embodiment includes a hopper unit that includes a granulated particle inlet and a granulated particle outlet. The granulated particles P are loaded from the granulated particle inlet, and the granulated particles P are fed from the granulated particle outlet onto the main surface of the substrate 1 supported by the forming roll 101. That is, in the present embodiment, the surface to which the granulated particles P are fed is the main surface of the substrate 1.

The forming roll 101 serving as the first conveying unit rotates in a direction DR101 to thereby convey the granulated particles P, which have been fed onto the main surface of the substrate 1, downstream together with the substrate 1.

The squeegee device 105 is a device for forming the granulated particle layer 2 by leveling the granulated particles P conveyed by the forming roll 101. As illustrated in FIG. 1, the squeegee roll 106 included in the squeegee device 105 rotates in a direction DR106 opposite to the direction DR101. As a result, the granulated particles P fed and conveyed on the main surface of the substrate 1 supported by the forming roll 101 are leveled to a predetermined thickness to form the granulated particle layer 2.

As illustrated in FIG. 2, the squeegee device 105 includes a squeegee roll 106, stock guides 110, 110, a rotation shaft 107, and fixing members 108, 108.

As illustrated in FIG. 3, the squeegee roll 106 is a cylindrical member. A recessed portion 1061 extending in the axial direction of the squeegee roll 106 is provided on an inner peripheral surface of the squeegee roll 106.

As illustrated in FIG. 4, a depression 1062 is provided at an end portion of the squeegee roll 106 in a direction of the axis R106. Due to the depression 1062, an end face 1063 of the squeegee roll 106 is in an annular shape. The area of the annular end face 1063 is smaller than the area of the cross-sectional that is perpendicular to the direction of the axis R106 of the squeegee roll 106 and that passes through the center R106C in the axial direction of the squeegee roll 106. Therefore, the frictional force acting between the squeegee roll 106 and the main surface of the stock guide 110 adjacent to the squeegee roll 106 is smaller than in a case where the depression 1062 is not provided.

In the squeegee roll 106 of the present embodiment, the depression 1062 having a side surface that is an inclined surface with respect to the end face 1063 is formed so that the thickness of the squeegee roll 106 in the radial direction increases as approaching the center R106C in the axis R106. In another embodiment, the squeegee roll may be formed with a depression having a side surface that is not inclined with respect to the end face. In yet another embodiment, a plurality of depressions may be provided at the end portions of the squeegee roll.

Furthermore, the end face 1063 of the squeegee roll 106 has been subjected to a low friction treatment. The low friction treatment refers to a treatment in which the coefficient of dynamic friction after the treatment becomes smaller than that before the treatment. Examples of the low friction treatment may include coating of the end face 1063 with a fluororesin, application of a lubricant to the end face 1063, and plating to the end face 1063. The low friction treatment performed on the end face 1063 of the squeegee roll 106 can reduce the frictional force acting between the squeegee roll 106 and the main surface of the stock guide 110 adjacent to the squeegee roll 106 as compared with the case where the low friction treatment has not been performed on the end face 1063 of the squeegee roll 106.

By making the frictional force small, specifically that acting on the squeegee roll 106 and the main surface of the stock guide 110 adjacent to the squeegee roll 106, rotation of the squeegee roll 106 becomes smooth, and rattling of the squeegee roll 106 and the stock guide 110 can be suppressed. As a result, it becomes possible to reduce fluctuations in the size of the gap between the peripheral surface of the squeegee roll 106 and the surface to which the granulated particles P are fed (in the present embodiment, the main surface of the substrate 1), and to reduce fluctuations in the thickness of the granulated particle layer 2. In addition, wear of the squeegee roll 106 and the stock guide 110 can be suppressed. Furthermore, it becomes possible to reduce changes in the gap amount G1 between the stock guide 110 and the surface to which the granulated particles P are fed, and it becomes possible to stably provide belt-like portions (electrode active material layer non-forming portions) on the substrate 1 in which the electrode active material layer 3 is not formed.

As illustrated in FIG. 5, the stock guide 110 is a plate-like member and has a shaft hole H110 that run through in a direction of the thickness so that the rotation shaft 107 can be inserted. The diameter of the shaft hole H110 is configured to be larger than the diameter of the rotation shaft 107 so that the rotation shaft 107 is freely rotatable in the shaft hole H110 of the stock guide 110.

The squeegee device 105 includes the stock guide 110, so that a portion where the granulated particles are not deposited can be formed in a belt-like shape on the substrate 1. As a result, loss of granulated particles when producing electrodes can be reduced as compared with the case where the granulated particles are removed from the formed granulated particle layer in a belt-like shape.

The stock guide 110 has a first surface 111 facing the peripheral surface of the forming roll 101, which serves as a support unit, via the substrate 1. The first surface 111 has a shape that conforms to the peripheral surface of the forming roll 101 serving as a support unit. In the present embodiment, the first surface is a concave curved surface having a radius of curvature substantially the same as the radius of curvature of the forming roll 101, and preferably a radius of curvature that is 95% or more and 110% or less of the radius of curvature of the forming roll 101. Since the first surface has a shape that conforms to the peripheral surface of the forming roll 101, it is possible to reduce the leakage of the granulated particles P, which have been fed above the forming roll 101, from a gap between the first surface 111 of the stock guide 110 and the main surface of the substrate 1 supported by the peripheral surface of the forming roll 101 to the outer side in the direction of the axis R101 of the forming roll 101. A slit 113 is provided in the stock guide 110 to run through from the end face 112 to which the position measurement unit 120 is fixed to the first surface 111. The slit 113 is provided to be parallel to the main surface of the stock guide 110.

In another embodiment, a through-hole that has an arbitrary shape and runs through from the end face 112 to the first surface 111 can be formed instead of the slit 113. In another embodiment, for example, the slit 113 may be a cylindrical through-hole.

In yet another embodiment, the slit 113 may not be parallel to the main surface of the stock guide 110.

The material constituting the stock guide 110 is not particularly limited. Examples of the material of the stock guide may include resins such as ethylene tetrafluoride (PTFE), acrylonitrile butadiene styrene (ABS), polypropylene (PP), polystyrene (PS), polyethylene (PE), ultra-high-molecular-weight polyethylene, monomer casting nylon (UMC), vinyl chloride (PVC), polyacetal, and a methacrylic resin; and metals such as aluminum and stainless steel. Since the coefficient of dynamic friction of the stock guide can be reduced, the material of the stock guide 110 is preferably a resin, and more preferably a fluororesin such as PTFE.

At least the surface of the stock guide 110 is preferably formed of a material having good slidability, such as a fluororesin. As a result, the frictional force between the stock guide 110 and the squeegee roll 106 is reduced, so that the squeegee roll 106 can smoothly rotate. Even if the first surface 111 of the stock guide 110 comes into contact with the substrate 1, any distortion of the substrate 1 can be reduced and breakage of the substrate 1 can be suppressed. As a result, the electrode active material layer 3 can be stably produced.

The stock guide 110 preferably has low dynamic friction with the substrate 1. Specifically, the coefficient of dynamic friction of the stock guide 110 is preferably 0.50 or less, and preferably 0.40 or less. The coefficient of dynamic friction of the stock guide 110 is ideally 0, and can be a lower limit of 0.04 or more. The coefficient of dynamic friction between the stock guide 110 and the substrate 1 can be measured in accordance with JIS K7125.

The lower the coefficient of dynamic friction of the stock guide 110 is, the more the adhesion between the granulated particles P and the stock guide 110 is likely to decrease. As a result, the decrease in the smoothness of the end portion of the electrode active material layer due to the adhesion of the granulated particles to the stock guide 110 can be suppressed.

In addition, the stock guide 110 may be subjected to a surface treatment in order to reduce the coefficient of dynamic friction. Examples of such a surface treatment may include a fluororesin coating treatment, application of a lubricant, and a plating treatment.

As illustrated in FIG. 6, the rotation shaft 107 is a cylindrical member, and has a recessed portion 1071 formed to extend in the axial direction of the rotation shaft 107 on the peripheral surface thereof. The squeegee roll 106 and the rotation shaft 107 are fixed to each other by inserting the squeegee roll 106 into the rotation shaft 107 and then inserting a prismatic key member so as to be fitted into the recessed portion 1061 of the squeegee roll 106 and the recessed portion 1071 of the rotation shaft 107. As a result, the squeegee roll 106 rotates with the rotation of the rotation shaft 107. The squeegee roll 106 and the rotation shaft 107 can be disassembled by removing the prismatic key member from the recessed portion 1061 of the squeegee roll 106 and the recessed portion 1071 of the rotation shaft 107.

The means for fixing the squeegee roll 106 to the rotation shaft 107 is not limited to the above, and any optional means may be employed. Preferably, the squeegee roll 106 fixed to the rotation shaft 107 is a fixing means for stably rotating about the rotation shaft 107, and a fixing means for preventing the squeegee roll 106 from vibrating may be employed.

For example, an air shaft or a mechanical shaft used as a shaft of a winding machine or the like may be used as the rotation shaft. When an air shaft is used as the rotation shaft, the squeegee roll can be fixed to the rotation shaft by making the squeegee roll hollow (not illustrated), inserting the hollow squeegee roll into the air shaft, and then causing the lug in the air shaft to protrude by compressed air.

Preferably, the squeegee roll 106 is fixed to the rotation shaft 107 so that the squeegee roll 106 is not eccentric. Thus, the uniformity of the basis weight of the electrode active material layer can be improved.

A driving device 109 such as a motor may be attached to an end portion of the rotation shaft 107, and the rotation shaft 107 may be driven to rotate.

As illustrated in FIG. 2, the stock guides 110, 110 and the squeegee roll 106 are alternately disposed along the axial direction of the rotation shaft 107, and the stock guides 110 are disposed at both ends in the axial direction of the squeegee roll 106, respectively. That is, the stock guide 110, the squeegee roll 106, and the stock guide 110 are disposed in this order along the axial direction of the rotation shaft 107, and the rotation shaft 107 is inserted into the shaft holes H110 of the stock guides 110 and the cylindrical squeegee roll 106.

The fixing members 108 that restrict movement of the stock guides 110 in the axial direction of the rotation shaft 107 are attached to respective end portions of the squeegee unit, which is composed of the stock guides 110, 110 and the squeegee roll 106. The fixing members 108 each include a fixing plate 1081, which is fixed to the rotation shaft 107, and an elastic member 1082, which includes an elastic body such as a coil spring, a leaf spring, or a rubber plate. Each of the stock guides 110, 110 disposed at both end portions of the squeegee roll 106 is pressed by the elastic member 1082 toward the center of the squeegee roll 106 in the axial direction. As a result, the fixing members 108, 108 fix the stock guides 110, 110 so as not to move in the axial direction of the rotation shaft 107. With the fixing members 108, 108 configured in this manner, the stock guides 110, 110 are freely rotatable about the rotation axis 107. Since the fixing members 108, 108 fix the stock guides 110, 110 so that the stock guides 110, 110 are freely rotatable about the rotation shaft 107 and do not move in the axial direction of the rotation shaft 107, the position of each of the stock guides 110, 110 in the longitudinal direction of the squeegee device 105 is less likely to vary due to vibrations during production, or the like. As a result, a change in the distance between the main surfaces of the stock guides 110, 110 is suppressed, and the electrode active material layer 3 having a predetermined width can be stably produced. Furthermore, belt-like electrode active material layer non-forming portions with a constant width can be stably provided on the substrate 1. In the present embodiment, the belt-like electrode active material layer non-forming portions with a constant width can be stably provided on both widthwise end portions of the substrate 1.

The fixing members 108 are configured to be detachably attachable to the rotation shaft 107, and the stock guides 110, 110 and the squeegee roll 106 can be detached from the squeegee device 105 as needed. As a result, the configuration of the squeegee device 105 can be easily changed to the configuration of a squeegee device 205 according to a modification to be described later. Furthermore, when the stock guides 110 or the squeegee roll 106 needs to be replaced because of wear or the like, only a member that needs to be replaced can be easily replaced. Therefore, the time and effort for replacing members are reduced and the continuous operation period of the production apparatus 100 is increased, whereby the electrode active material layer 3 can be stably produced.

As illustrated in FIG. 2, the stock guides 110, 110 disposed at both end portions in the longitudinal direction (axial direction of the rotation shaft 107) of the squeegee device 105 each have a main surface S110a, which faces the squeegee roll 106, and a main surface S110b, which is provided on a side opposite to the main surface S110a. The stock guides 110, 110 are disposed so that a distance D110 between the main surface S110b and the main surface S110b becomes larger than the width of the substrate 1, preferably larger than the width W101 of the forming roll 101 that serves as a support unit. Herein, the width of the substrate 1 means the length of the substrate 1 in a direction orthogonal to the conveyance direction of the granulated particle layer 2, and the width W101 of the forming roll 101 means the length of the forming roll 101 in a direction orthogonal to the conveyance direction of the granulated particle layer 2.

The stock guides 110, 110 are disposed so that the distance D110 between the main surface S110b and the main surface S110b of the stock guides 110, 110 becomes larger than the width of the substrate 1, preferably larger than the width W101 of the forming roll 101 that serves as a support unit. Thus, it is possible to prevent a part of the granulated particles P that have been leveled by the squeegee roll 106 and moved to both widthwise end portions of the squeegee device 105 from leaking downstream beyond the stock guides 110, 110. As a result, defective formation of the electrode active material layer can be suppressed.

The gap amount G1 between the first surface 111 of the stock guide 110 and the surface to which the granulated particles are fed (in the present embodiment, the main surface of the substrate 1) can be adjusted by the gap amount adjustment unit 131 to be described later.

As illustrated in FIG. 7, the position measurement unit 120 is fixed to the end face 112 of the stock guide 110 opposite to the first surface 111. The position measurement unit 120 may be a measuring instrument such as a laser displacement gauge. Since the position measurement unit 120 is fixed to the stock guide 110, when the gap amount adjustment unit 131, which will be described later, moves up and down the stock guide 110, the position measurement unit 120 also moves up and down together with the stock guide 110. Therefore, the position measurement unit 120 can measure the distance (distance D1) corresponding to the gap amount G1.

As described above, the slit 113 is provided in the stock guide 110 to run through from the end face 112, to which the position measurement unit 120 is fixed, to the first surface 111. In the present embodiment, the position measurement unit 120 emits laser light from a laser emission port (not shown), and the emitted laser light passes through the slit 113 and is reflected by a surface to which the granulated particles P are fed and which faces the first surface 111.

The reflected laser light passes through the slit 113 and is received by a photoreceptor unit (not shown) of the position measurement unit 120. As a result, the distance D1 between the position measurement unit 120 and the surface to which the granulated particles P are fed can be measured.

By fixing the position measurement unit 120 to the stock guide 110 and by providing the slits 113 to measure the distance D1, rattling of the position measurement unit 120 can be reduced to improve the measurement accuracy of the distance D1.

The position measurement unit 120 is electrically connected to the control unit 140, which will be described later.

The stock guide 110 of the squeegee device 105 is provided with the gap amount adjustment unit 131 for adjusting the gap amount G1. As a mechanism for adjusting the gap amount G1, an optional mechanism such as an elevating mechanism including a servo motor and a ball screw may be used. In the present embodiment, a nut is fixed to the stock guide 110. A ball screw to mesh with the nut is disposed along a direction orthogonal to the axis R101 of the forming roll 101. A servo motor is attached to the end portion of the ball screw so that the ball screw can be driven to rotate.

The squeegee device 105 is provided with a position adjustment mechanism so that a distance between the peripheral surface of the squeegee roll 106 included in the squeegee device 105 and the peripheral surface of the forming roll 101 serving as the first conveying unit can be adjusted. By adjusting such a distance, the thickness of the granulated particle layer 2 can be adjusted. As a result, the weight per unit area (basis weight) of the electrode active material layer 3, which is obtained by rolling the granulated particle layer 2, can be adjusted.

The gap amount adjustment unit 131 is configured so that the gap amount G1 can be adjusted independently of the adjustment of the distance between the peripheral surface of the squeegee roll 106 and the peripheral surface of the forming roll 101.

The gap amount adjustment unit 131 is electrically connected to the control unit 140, which will be described later. The gap amount adjustment unit 131 receives a control signal from the control unit 140. Based on the signal from the control unit 140, the gap amount adjustment unit 131 adjusts the gap amount G1. In the present embodiment, the servo motor rotates the ball screw in a predetermined direction of rotation by a rotation amount based on the signal from the control unit 140. Accordingly, the gap amount G1 can be adjusted by moving the stock guide 110 up or down.

The rolling unit 130 includes the forming roll 101 that functions as a rolling roll, and the rolling roll 130a. The rolling roll 130a is a cylindrical member and is driven to rotate about an axis R130a at a constant speed in a direction in which the substrate 1 and the granulated particle layer 2 are conveyed downstream. The axis R101 and the axis R130a are disposed to be parallel to each other. A gap is provided between the peripheral surface of the forming roll 101 and the peripheral surface of the rolling roll 130a. The granulated particle layer 2 is guided into the gap between the forming roll 101 and the rolling roll 130a. In the present embodiment, the granulated particle layer 2 is formed on the substrate 1, and the stacked body of the substrate 1 and the granulated particle layer 2 is guided into the gap between the forming roll 101 and the rolling roll 130a. The granulated particle layer 2 stacked on the substrate 1 is rolled to be brought into close contact with the substrate 1 when passing through the gap between the forming roll 101 and the rolling roll 130a. As a result, the electrode active material layer 3 having a predetermined thickness is formed on the substrate 1.

The gap (distance) between the peripheral surface of the forming roll 101 and the peripheral surface of the rolling roll 130a can be appropriately adjusted depending on the desired thickness, porosity, and the like of the electrode active material layer 3.

Examples of materials constituting the peripheral surfaces of the forming roll 101 and the rolling roll 130a may include a rubber, metal, and an inorganic material.

The rolling roll 130a may have a mechanism for heating the peripheral surface thereof. This mechanism can roll the granulated particle layer 2 while heating it. By rolling the granulated particle layer 2 while heating, the binder contained in the granulated particles P can be softened or melted, so that the granulated particles P can be more firmly bound to each other.

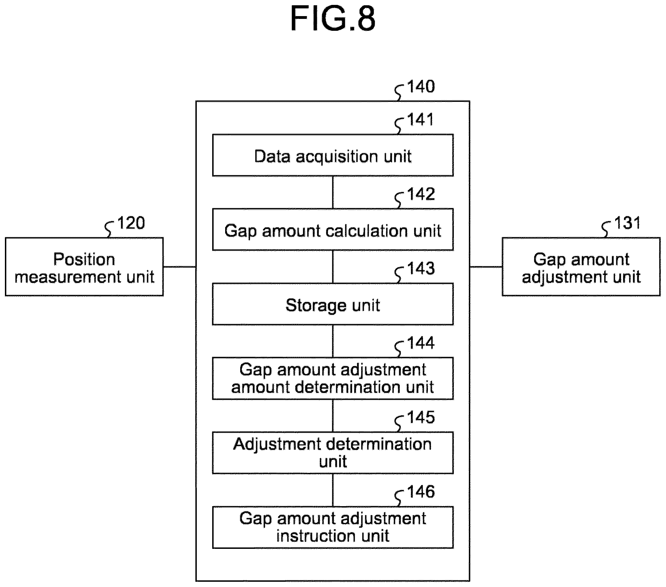

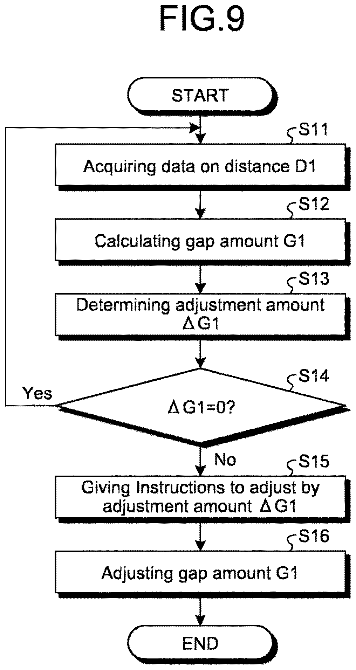

FIG. 8 is a schematic diagram illustrating the configuration of the control unit of the production apparatus according to the first embodiment. FIG. 9 is a flowchart for describing processing performed by the control unit 140 according to the first embodiment.

As illustrated in FIG. 8, the position measurement unit 120 and the gap amount adjustment unit 131 are electrically connected to the control unit 140. The control unit 140 includes a data acquisition unit 141, a gap amount calculation unit 142, a storage unit 143, a gap amount adjustment amount determination unit 144, an adjustment determination unit 145, and a gap amount adjustment instruction unit 146.

The data acquisition unit 141 acquires data on the distance D1 from the position measurement unit 120 (step S11).

The gap amount calculation unit 142 calculates a gap amount G1 between the first surface 111 of the stock guide 110 and the main surface of the substrate 1, which is a surface to which the granulated particles P are fed, based on the data on the distance D1 and the dimension data on the stock guide 110 stored in the storage unit 143 (step S12) .

The gap amount adjustment amount determination unit 144 determines the adjustment amount ΔG1 for the gap amount G1 based on a difference between the calculated gap amount G1 and a gap amount threshold T1 stored in the storage unit 143 (step S13). The gap amount threshold T1 is set to be greater than 0 µm.

The adjustment determination unit 145 determines whether the adjustment amount ΔG1 for the gap amount G1 is 0 (whether the gap amount G1 needs to be adjusted) (step S14). When ΔG1 is 0 (step S14: Yes), the processing returns to step S11.

When ΔG1 is not 0 (step S14: No), the gap amount adjustment instruction unit 146 instructs the gap amount adjustment unit 131 to make an adjustment by the determined adjustment amount ΔG1 (step S15).

The gap amount adjustment unit 131 moves the stock guide 110 up or down based on the instructed adjustment amount ΔG1 to adjust the gap amount G1 (step S16).

The functions of the control unit 140 may be implemented by a computer including an input interface, an output interface, a CPU (Central Processing Unit), a storage device (such as a ROM (Read Only Memory) and a RAM (Random Access Memory)). The position measurement unit 120 is connected to the input interface. The gap amount adjustment unit 131 is connected to the output interface. The CPU and the storage device are connected to each other by buses. The storage device stores programs. The CPU executes the programs stored in the storage device.

The production apparatus 100 is configured so that the gap amount G1 between the first surface 111 of the stock guide 110 and the surface to which the granulated particles P are fed (in the present embodiment, the main surface of the substrate 1) becomes larger than 0 µm. This reduces occurrence of distortion in the substrate 1 due to the contact of the stock guide 110 with the substrate 1. As a result of reducing the distortion in the substrate 1, breakage of the substrate 1 can be suppressed, and production stability of the electrode active material layer 3 can be improved.

The gap amount threshold T1 can be set to an optional value greater than 0 µm. For example, the gap amount threshold T1 can be preferably less than or equal to a 10% number-average particle diameter (D10) of the granulated particles P, more preferably less than or equal to a 5% number-average particle diameter (D5), and further preferably less than or equal to a 3% number-average particle diameter (D3). The lower limit value is usually greater than 0% of the volume-average particle diameter (D50) the granulated particles P have.

By setting the gap amount threshold T1 to be equal to or less than the above-mentioned upper limit value, it is possible to effectively reduce the leakage of the granulated particles P, which have been fed above the forming roll 101, from the gap between the first surface 111 of the stock guide 110 and the main surface of the substrate 1 supported by the peripheral surface of the forming roll 101 to the outer side in the direction of the axis R101 of the forming roll 101. As a result, it is possible to effectively prevent the leaked granulated particles P from being conveyed to the rolling unit 130 and rolled together with the granulated particle layer 2. Defective formation of the obtained electrode active material layer 3 can thereby be effectively suppressed. Since the leakage of the granulated particles P can be effectively reduced, the yield of the granulated particles P can be improved, and thus the production costs of the electrode active material layer 3 can be reduced.

In another embodiment, the production apparatus may be configured such that the gap amount G1 is 0 µm, and the gap amount threshold T1 may be set to 0 µm. As a result, the gap between the first surface 111 of the stock guide 110 and the main surface of the substrate 1 supported by the peripheral surface of the forming roll 101 is eliminated, and thus it becomes possible to further effectively reduce the leakage of the granulated particles P to the outer side in the direction of the axis R101 of the forming roll 101.

In another embodiment, the production apparatus may further include a height sensor for measuring the height of the fed granulated particles on the upstream side of the squeegee device, and a control unit for adjusting the amount of the granulated particles to be fed from the feeding unit based on information from the height sensor. Fluctuations in the weight per unit area (basis weight) of the electrode active material 3 obtained by rolling the granulated particle layer 2 can thereby be reduced to adjust the basis weight with high precision.

### (Optional configuration)

In the production apparatus according to the present invention, an optional configuration may be disposed, as necessary, in addition to the above-described configuration.

For example, a coating unit that is disposed upstream of the feeding unit of the production apparatus and that applies a binder coating liquid onto the substrate can be included as an optional configuration. If the production apparatus includes the coating unit, the binder coating liquid can be applied onto the substrate to form a binder coating liquid layer and the granulated particles can be fed onto the binder coating liquid layer. This can make the granulated particles come into close contact with the substrate. Examples of the coating unit may include a slot die head, a gravure head, a bar coat head, and a knife coat head.

The production apparatus can include a collection unit that collects the substrate on which the electrode active material layer is formed, downstream of the rolling unit. Examples of the collection unit may include a roll for winding up the substrate.

### <2.Modification of first embodiment>

Next, a production apparatus of an electrode active material layer according to a modification of the first embodiment will be described. The production apparatus according to the present modification is an apparatus in which a squeegee device 205 is attached instead of the squeegee device 105 in the production apparatus 100. Components other than the squeegee device 205 are the same as those of the production apparatus 100, and thus descriptions thereof will be omitted.

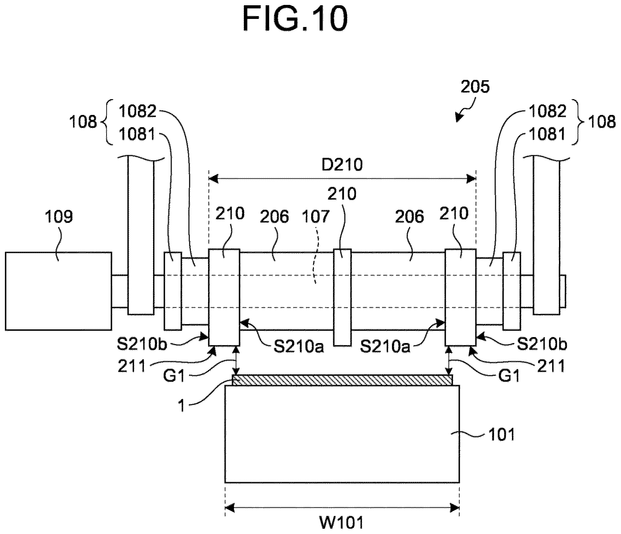

FIG. 10 is a front view schematically illustrating the squeegee device 205 according to a modification of the first embodiment. As illustrated in FIG. 10, the squeegee device 205 includes two squeegee rolls 206, 206, three stock guides 210, 210, 210, a rotation shaft 107, and fixing members 108, 108. In this modification, the number of the squeegee rolls 206 is two, and the number of the stock guides 210 is 2 + 1. The squeegee roll 206 has the same configuration as that of the squeegee roll 106 except for the length in the axial direction. The stock guide 210 has the same configuration as that of the stock guide 110. By using the squeegee device 205, the stripe-shaped electrode active material layer 3 can be produced.

The fixing members 108, 108 of the squeegee device 205 also fix the stock guides 210, 210, 210 so that the stock guides do not move in the axial direction of the rotation shaft 107, similarly to the fixing members 108, 108 of the squeegee device 105. The rotation shaft 107 is freely rotatable with respect to the stock guides 110, 110. Since the fixing members 108, 108 fix the stock guides 210, 210, 210 so that the stock guides 210, 210, 210 are freely rotatable about the rotation shaft 107 and do not move in the axial direction of the rotation shaft 107, the positions of the respective stock guides 210, 210, 210 in the lengthwise direction of the squeegee device 205 are suppressed from varying due to vibrations during production, etc. This suppresses a change in the distance between the main surfaces of the stock guides 210, 210, 210, and the electrode active material layer 3 with a predetermined width can be stably produced. In addition, belt-like electrode active material layer non-forming portions with a constant width can be stably formed on the substrate 1.

The length of each of the squeegee rolls 206, 206 in the axial direction may have any given dimension depending on the width of the stripe-shaped electrode active material layer 3. The respective lengths of the squeegee rolls 206, 206 in the axial direction may be the same as or different from each other.

The thickness of each of the stock guides 210, 210, 210 may be any given dimension depending on the width of the belt-like portion (electrode active material layer non-forming portions) where the electrode active material layer 3 is not formed.

The sum of the axial lengths of the squeegee rolls 206, 206 and the thicknesses of the stock guides 210, 210, 210 may be a constant dimension depending on the length of the rotation shaft 107.

As illustrated in FIG. 10, the stock guides 210 and the squeegee rolls 206 are alternately disposed along the axial direction of the rotation shaft 107, and the stock guides 210 are respectively disposed at both end portions in the axial direction of the squeegee rolls 206. That is, the stock guide 210, the squeegee roll 206, the stock guide 210, the squeegee roll 206, and the stock guide 210 are disposed in this order along the axial direction of the rotation shaft 107, and the rotation shaft 107 is inserted into the shaft holes of the stock guides 210 and the cylindrical squeegee rolls 206. As described above, by disposing the stock guides 210, 210, 210 and the squeegee rolls 206, in the present embodiment, the belt-like electrode active material layer non-forming portions with a constant width can be stably provided on both widthwise end portions of the substrate 1 and on the middle portion of the substrate 1.

The stock guides 210, 210 disposed at both end portions in the longitudinal direction (the axial direction of the rotation shaft 107) of the squeegee device 205 each have a main surface S210a facing the squeegee roll 206 and a main surface S210b opposite to the main surface S210a. The stock guides 210, 210 are disposed so that a distance D210 between the main surface S210b and the main surface S210b becomes larger than the width of the substrate 1, preferably larger than W101 width of the forming roll 101 that serves as a support unit. Since the stock guides 210, 210 are disposed so that the distance D210 between the main surfaces S210b, S210b of the stock guides 210, 210 disposed at both end portions in the longitudinal direction of the squeegee device 205 becomes larger than the width of the substrate 1, preferably larger than the width W101 of the forming roll 101 that serves as a support unit, it is possible to prevent a part of the granulated particles P that have been leveled by the squeegee roll 206 and moved to both widthwise end portions of the squeegee device 205 from leaking downstream beyond the stock guides 210, 210 disposed at both lengthwise end portions of the squeegee device 205. As a result, defective formation of the electrode active material layer can be suppressed.

By disposing the stock guide 210 between the squeegee rolls 206, 206, the granulated particles P deposited in the middle portion in the width direction of the surface to which the granulated particles P are fed (in the present modification, the main surface of the substrate 1) are removed by the stock guide 210, and the granulated particle layer 2 can include a belt-like granulated particle non-depositing portion in which the granulated particles P are not deposited. The electrode active material layer 3 in a stripe shape can be produced by rolling the granulated particle layer 2 provided with the granulated particle non-depositing portion.

As described above, the gap amount G1 between the first surface 211 of the stock guide 210 and the surface to which the granulated particles are fed (in the present modification, the main surface of the substrate 1) can be adjusted by the gap amount adjustment unit 131.

In the squeegee device 205, the stock guides 210, 210, 210 and the squeegee rolls 206, 206 can be detached from the squeegee device 205 similarly to the squeegee device 105. Accordingly, the configuration of the squeegee device 205 can be easily changed.

Not only the squeegee device 205 of the present modification but also a squeegee device in which the number of squeegee rolls is n (n is an integer of 2 or more) and the number of stock guides is n + 1 may be used as a substitute for the squeegee device 105. With a squeegee device having n squeegee rolls and n+1 stock guides, n belt-shaped electrode active material layers 3 can be produced on the main surface of the substrate 1.

### <3. Second embodiment>

Next, a production apparatus of an electrode active material layer according to a second embodiment will be described.

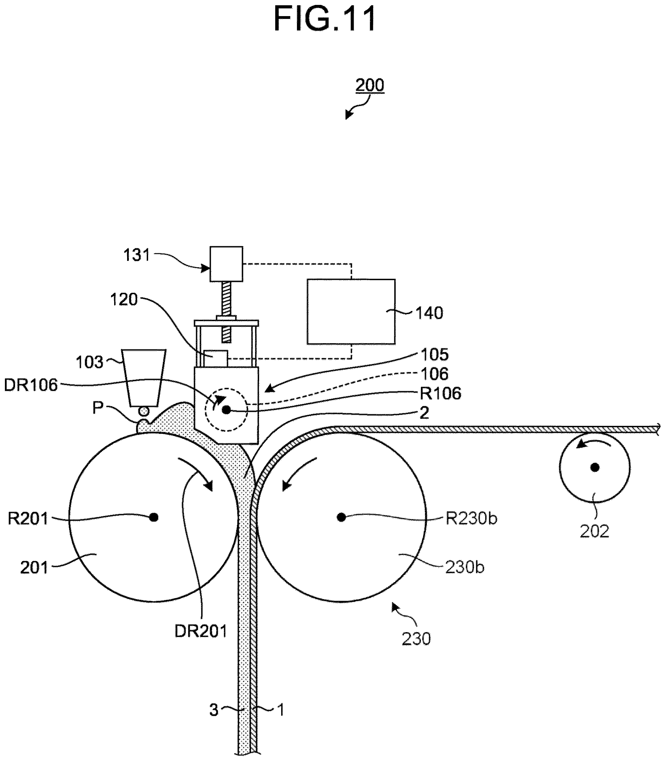

FIG. 11 is a schematic diagram illustrating a production apparatus of an electrode active material layer according to the second embodiment.

The production apparatus 200 according to the present embodiment includes a forming roll 201, a feeding unit 103, a second conveying unit 202, a squeegee device 105, a position measurement unit 120, a rolling roll 230b, a gap amount adjustment unit 131, and a control unit 140. The forming roll 201 functions as a support unit, a first conveying unit, and a rolling unit.

The feeding unit 103 feeds the granulated particles P on the forming roll 201 of the production apparatus 200, or more specifically, onto the peripheral surface of the forming roll 201 that serves as the support unit,. The forming roll 201 that serves as the first conveying unit rotates in a direction DR201 to thereby convey the granulated particles P downstream. The squeegee roll 106 rotates in a direction DR106 opposite to the direction DR201, and so the granulated particles P fed onto and conveyed on the peripheral surface of the forming roll 201 are leveled to a predetermined thickness, thereby forming the granulated particle layer 2.

The forming roll 201 is paired with the rolling roll 230b to constitute the rolling unit 230. The rolling roll 230b is a cylindrical member and is driven to rotate at a constant speed about an axis R230b in a direction in which the substrate 1 and the granulated particle layer 2 are conveyed downstream. An axis R201 of the forming roll 201 and the axis R230b of the rolling roll 230b are disposed to be parallel to each other. A gap is provided between the peripheral surface of the forming roll 201 and the peripheral surface of the rolling roll 230b. As the forming roll 201 rotates, the granulated particle layer 2 conveyed by the peripheral surface of the forming roll 201 is guided into the gap between the forming roll 201 and the rolling roll 230b.

The second conveying unit 202 is, for example, a conveyance roll, and conveys the substrate 1 to the rolling unit 230. Specifically, the second conveying unit 202 conveys the substrate 1 to the peripheral surface of the rolling roll 230b constituting the rolling unit 230. As the rolling roll 230b rotates, the substrate 1 is guided into the gap between the forming roll 201 and the rolling roll 230b.

The granulated particle layer 2 and the substrate 1 are guided into the gap between the forming roll 201 and the rolling roll 230b, and stacked. When passing through the gap between the forming roll 201 and the rolling roll 230b, the granulated particle layer 2 and the substrate 1 are rolled to form an electrode active material layer 3 having a predetermined thickness on the substrate 1.

The gap between the peripheral surface of the forming roll 201 and the peripheral surface of the rolling roll 230b can be appropriately adjusted depending on a desired thickness, porosity, and the like of the electrode active material layer 3. Examples of the material constituting the peripheral surface of the rolling roll 230b may include the materials exemplified in the description of the rolling roll 130b. The rolling roll 230b may have a mechanism for heating the peripheral surface thereof.

Similarly to the production apparatus 100, the production apparatus 200 includes a squeegee device 105. As a result, the electrode active material layer 3 with a predetermined width can be stably produced. In addition, a belt-shaped electrode active material layer non-forming portion having a constant width can be stably provided on the substrate 1. In the present embodiment, the belt-shaped electrode active material layer non-forming portion having a constant width can be stably provided on both widthwise end portions of the substrate 1.

In the present embodiment, the production apparatus 200 includes the squeegee device 105. However, in another embodiment, the production apparatus 200 may include the squeegee device 205 instead of the squeegee device 105.

Similarly to the production apparatus 100, the production apparatus 200 is configured so that the gap amount G1 between the first surface 111 of the stock guide 110 and the surface to which the granules P are fed (in the present embodiment, the peripheral surface of the forming roll 201 that serves as the support unit) becomes larger than 0 µm. This reduces the stock guide 110 coming into contact with and being worn by the forming roll 201. As a result, the production stability of the electrode active material layer 3 can be improved.

The production apparatus 200 includes the stock guide 110, the position measurement unit 120, the gap amount adjustment unit 131, and the control unit 140, which are configured the same as those of the production apparatus 100. Similarly to the production apparatus 100, the production apparatus 200 can effectively reduce the leakage of the granulated particles P, which have been fed onto the forming roll 201, from the gap between the first surface 111 of the stock guide 110 and the peripheral surface of the forming roll 201 to the outer side in the direction of the axis R201 of the forming roll 201. This can effectively prevent the leaked granulated particles P being conveyed to the rolling unit 230 from being rolled together with the granulated particle layer 2. Defective formation of the electrode active material layer 3 obtained can thereby be effectively suppressed. Since the leakage of the granulated particles P can be effectively reduced, the yield of the granulated particles P can be improved to reduce the production costs of the electrode active material layer 3.

### <4. Third embodiment>

Next, a production apparatus of an electrode active material layer according to a third embodiment will be described.

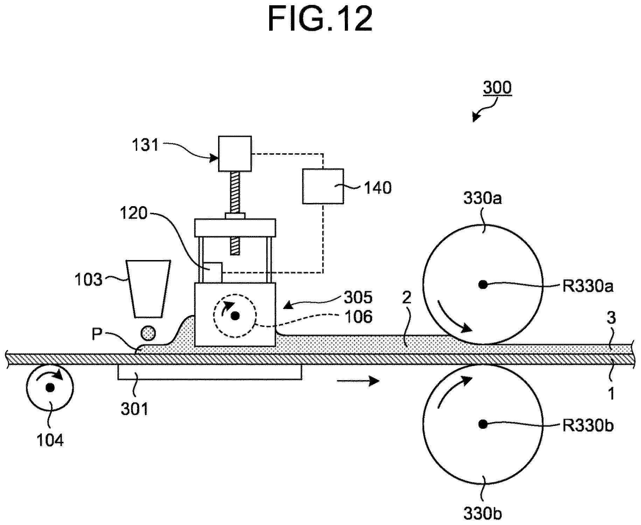

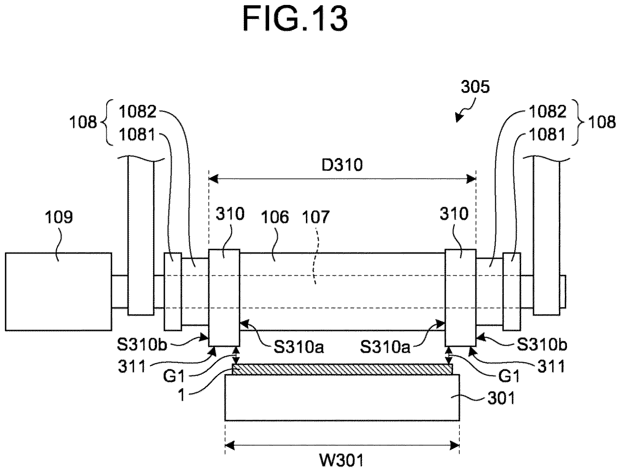

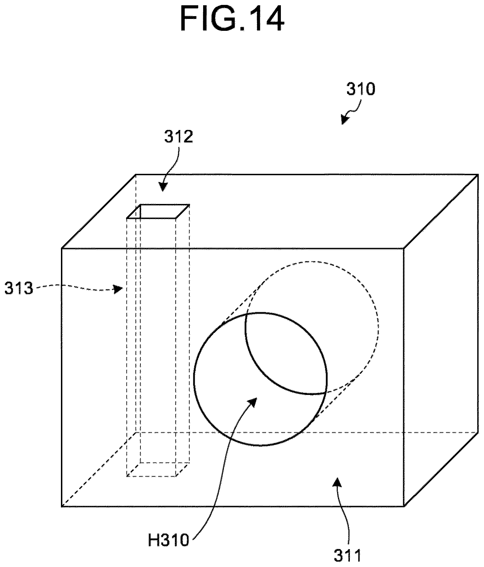

FIG. 12 is a schematic diagram illustrating the production apparatus of an electrode active material layer according to the third embodiment. FIG. 13 is a front view schematically illustrating a squeegee device according to the third embodiment. FIG. 14 is a perspective view schematically illustrating an example of a stock guide included in the squeegee device according to the third embodiment.

As illustrated in FIG. 12, a production apparatus 300 according to the present embodiment includes a support unit 301, a feeding unit 103, a third conveying unit 104, a pair of rolling rolls 330a, 330b that serve as a first conveying unit and a rolling unit, a squeegee device 305, a position measurement unit 120, a gap amount adjustment unit 131, and a control unit 140.

In the present embodiment, the support unit 301 has a board-like shape. The feeding unit 103 feeds the granulated particles P onto a main surface of the substrate 1 supported by the support unit 301 and above the support unit 301. In other words, the surface to which the granulated particles P are fed is the main surface of the substrate 1. The rolling rolls 330a, 330b serving as the first conveying unit rotate in opposite directions to convey the substrate 1 and the granulated particles P, which have been fed onto the main surfaces of the substrate 1, downstream.

As illustrated in FIG. 13, the squeegee device 305 includes a squeegee roll 106, stock guides 310, 310, a rotation shaft 107, and fixing members 108, 108. The squeegee device 305 has the same configuration as that of the squeegee device 105 except that the stock guide 310 is provided instead of the stock guide 110.

The squeegee device 305 is configured so that a distance between a peripheral surface of the squeegee roll 106 included in the squeegee device 305 and the support unit 301 can be adjusted.

As illustrated in FIG. 14, the stock guide 310 is a plate-like member, and has a shaft hole H310 running through in a direction of the thickness so that the rotation shaft 107 can be inserted thereinto. The diameter of the shaft hole H310 is larger than the diameter of the rotation shaft 107 so that the rotation shaft 107 is freely rotatable in the shaft hole H310 of the stock guide 310. The stock guide 310 has a first surface 311 facing the main surface of the support unit 301 via the substrate 1. The first surface 311 has a planar shape conforming to the main surface of the support unit 301. A slit 313 is provided in the stock guide 310 to run through from the end face 312, to which the position measurement unit 120 is fixed, to the first surface 311. The slit 313 is provided to be parallel to the main surface of the stock guide 310.

In another embodiment, a through-hole having an optional shape and running through from the end face 312 to the first surface 111 may be provided instead of the slit 313. In another embodiment, for example, the slit 113 may be a cylindrical through-hole.

In yet another embodiment, the slit 313 may not be parallel to the main surface of the stock guide 310.

Similarly to the squeegee device 105, in the squeegee device 305, the fixing members 108, 108 fix the stock guides 310, 310 so that the stock guides 310, 310 do not move in the axial direction of the rotation shaft 107. The rotation shaft 107 is freely rotatable with respect to the stock guides 310, 310. As described above, since the fixing members 108, 108 fix the stock guides 310, 310 so that the rotation shaft 107 is freely rotatable with respect to the stock guides 310, 310 and the stock guides 310, 310 do not move in the axial direction of the rotation shaft 107, the positions of the stock guides 310, 310 in the longitudinal direction of the squeegee device 305 are suppressed from varying due to vibrations during production, etc. This suppresses a change in the distance between the main surfaces of the stock guides 310, 310, and the electrode active material layer 3 with a predetermined width can be stably produced. In addition, the belt-like electrode active material layer non-forming portions with a constant width can be stably provided on the substrate 1. In the present embodiment, the belt-like electrode active material layer non-forming portions with a constant width can be stably provided on both widthwise end portions of the substrate 1.

As illustrated in FIG. 13, the stock guides 310, 310 disposed at both end portions in the longitudinal direction (axial direction of the rotation shaft 107) of the squeegee device 305 each have a main surface S310a, which faces the squeegee roll 106, and a main surface S310b, which is provided on a side opposite to the main surface S310a. The stock guides 310, 310 are disposed so that a distance D310 between the main surface S310b and the main surface S310b becomes larger than the width of the substrate 1, preferably larger than the width W301 of the support unit 301. Herein, the width of the substrate 1 means the length of the substrate 1 in a direction orthogonal to the conveyance direction of the granulated particle layer 2, and the width W301 of the support unit 301 means the length of the support unit 301 in a direction orthogonal to the conveyance direction of the granulated particle layer 2.

The stock guides 310, 310 are disposed so that the distance D310 between the main surface S310b and the main surface S310b of the stock guides 310, 310 becomes larger than the width of the substrate 1, preferably larger than the width W301 of the support unit 301. Thus, it is possible to prevent a part of the granulated particles P that have been leveled by the squeegee roll 106 and moved to both widthwise end portions of the squeegee device 305 from leaking downstream beyond the stock guides 310, 310 while the granulated particles P remain on the substrate 1 and on the main surface S310b side. As a result, defective formation of the electrode active material layer can be suppressed.

Making the distance D310 larger than the width of the substrate 1 or the width W301 may be realized by increasing the width of the stock guide 310 or by extending the main surface S310b of the stock guide 310 opposite to the main surface S310a partially toward the outer side in the width direction of the substrate 1. Here, as a structure extending partially outward, for example, a structure in which a scraper having a height of the lower surface equal to the height of the first surface 311 that is the lower surface of the stock guide 310 is connected to the main surface 310b of the stock guide can be exemplified.

The production apparatus 300 includes the squeegee device 305 including one squeegee roll 106 and two stock guides 310. A production apparatus in another embodiment may include a squeegee device including n squeegee rolls 106 (n is an integer of 2 or more) and n+1 stock guides 310 instead of the squeegee device 305.

The paired rolling rolls 330a, 330b are configured to function as a first conveying unit and also as a rolling unit. The paired rolling rolls 330a, 330b are disposed so that the respective rotation axes R330a, R330b are parallel to each other. In the present embodiment, the support unit 301 and the paired rolling rolls 330a, 330b are disposed so that a plane including the rotation axis R330a of the rolling roll 330a and the rotation axis R330b of the rolling roll 330b is orthogonal to a plane including the main surface of the support unit 301.

Similarly to the production apparatus 100, the production apparatus 300 is configured so that the gap amount G1 between the first surface 311 of the stock guide 310 and a surface to which the granulated particles P are fed (in the present embodiment, the main surface of the substrate 1) becomes larger than 0 µm. This reduces occurrence of distortion in the substrate 1 due to the contact of the stock guide 310 with the substrate 1. As a result of reducing the distortion of the substrate 1, breakage of the substrate 1 can be suppressed, and production stability of the electrode active material layer 3 can be improved.

### <5.Modification of third embodiment>

Next, a production apparatus of an electrode active material layer according to a modification of the third embodiment will be described.

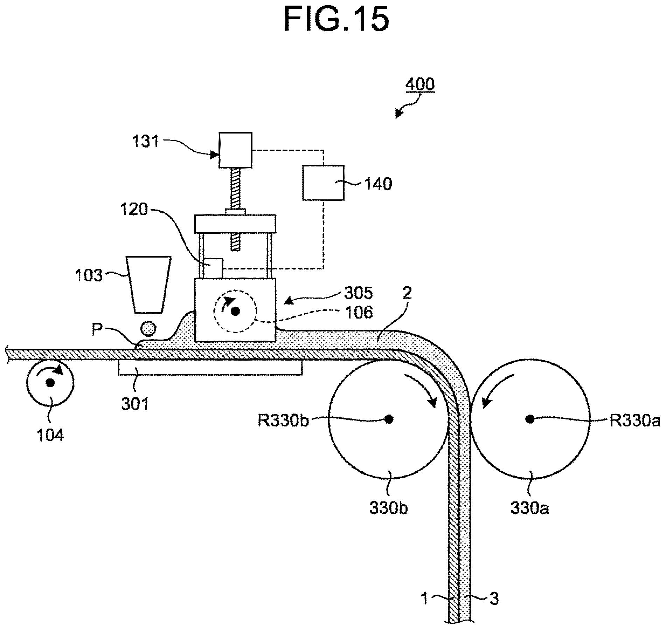

FIG. 15 is a schematic diagram illustrating a production apparatus according to a modification of the third embodiment.

In the production apparatus 400, the support unit 301 and the paired rolling rolls 330a, 330b are disposed so that a plane including the rotation axis R330a of the rolling roll 330a and the rotation axis R330b of the rolling roll 330b is parallel to a plane including the main surface of the support unit 301.

Since the production apparatus 400 includes the squeegee device 305, the electrode active material layer 3 having a predetermined width can be stably produced similarly to the production apparatus 300. In addition, the belt-like electrode active material layer non-forming portions with a constant width can be stably provided on the substrate 1. In the present embodiment, the belt-like electrode active material layer non-forming portions with a constant width can be stably provided on both widthwise end portions of the substrate 1.

Similarly to the production apparatus 300, the production apparatus 400 is configured so that the gap amount G1 between the first surface 311 of the stock guide 310 and a surface to which the granulated particles P are fed (in the present embodiment, the main surface of the substrate 1) becomes larger than 0 µm. This reduces occurrence of distortion in the substrate 1 due to the contact of the stock guide 310 with the substrate 1. As a result of reducing the distortion of the substrate 1, breakage of the substrate 1 can be suppressed, and production stability of the electrode active material layer 3 can be improved.

### Reference Sign List

1: substrate
2: granulated particle layer
3: electrode active material layer
P: granulated particles
100: production apparatus
101: forming roll (support unit, first conveying unit, or rolling unit)
W101: width
R101: axis
DR101: direction
103: feeding unit
104: third conveying unit
105: squeegee device
106: squeegee roll
1061: recessed portion
1062: depression
1063: end face
R106: axis
R106C: center
DR106: direction
107: rotation shaft
1071: recessed portion
108: fixing member
1081: fixing plate
1082: elastic member
109: driving device
110: stock guide
H110: shaft hole
D110: distance
S110a: main surface
S110b: main surface
111: first surface
112: end face
113: slit
205: squeegee device
206: squeegee roll
210: stock guide
120: position measurement unit
130: rolling unit
130a: rolling roll
131: gap amount adjustment unit
140: control unit
141: data acquisition unit
142: gap amount calculation unit
143: storage unit
144: gap amount adjustment amount determination unit
145: adjustment determination unit
146: gap amount adjustment instruction unit
201: forming roll
R201: axis
DR201: direction
202: second conveying unit
230: rolling unit
230b: rolling roll
R230b: axis
301: support unit
W301: width
310: stock guide
S310a: main surface
S310b: main surface
D310: distance
311: first surface
312: end face
313: slit
330a: rolling roll
330b: rolling roll
R330a: axis
R330b: axis

## Claims

1. A production apparatus of an electrode active material layer, comprising:
a support unit;
a feeding unit that feeds granulated particles on or above the support unit, the granulated particles containing an electrode active material and a binder;
a first conveying unit that conveys the granulated particles that have been fed on or above the support unit;
a squeegee device that levels the granulated particles which are conveyed to form a granulated particle layer; and
a rolling unit that rolls the granulated particle layer to form an electrode active material layer,
wherein:
the squeegee device includes
at least one cylindrical squeegee roll,
two or more stock guides that are in a plate shape and have a shaft hole,
a rotation shaft that is inserted into the shaft hole of the stock guide and that penetrates the at least one squeegee roll in an axial direction of the squeegee roll, and
a fixing member that restricts movement of the stock guides in an axial direction of the rotation shaft;
the stock guides and the at least one squeegee roll are alternately disposed along the axial direction of the rotation shaft, and the stock guides are disposed at both ends of the at least one squeegee roll in the axial direction one each;
the at least one squeegee roll is fixed to the rotation shaft; and
the rotation shaft is freely rotatable with respect to the stock guides.

2. The production apparatus of an electrode active material layer according to claim 1, wherein the number of the at least one squeegee roll included in the squeegee device is n, the number of the stock guides included in the squeegee device is (n+1), and n is 2 or more.

3. The production apparatus of an electrode active material layer according to claim 1, further comprising a second conveying unit that conveys a substrate to the rolling unit, wherein the rolling unit rolls the granulated particle layer that has been overlaid on the conveyed substrate.

4. The production apparatus of an electrode active material layer according to claim 1, further comprising a third conveying unit that conveys a substrate to the support unit, wherein
the support unit supports the substrate, and
the feeding unit feeds the granulated particles on the substrate that has been supported by the support unit.

5. The production apparatus of an electrode active material layer according to claim 4, wherein a distance between main surfaces of the stock guides that are disposed at both ends in a longitudinal direction of the squeegee device is larger than a width of the substrate, the main surfaces being opposite to main surfaces that face the squeegee roll.

6. The production apparatus of an electrode active material layer according to claim 1, wherein a single roll serves as the support unit and the first conveying unit.

7. The production apparatus of an electrode active material layer according to claim 1, wherein both end faces of the at least one squeegee roll are subjected to a low friction treatment.

8. The production apparatus of an electrode active material layer according to claim 1, wherein an area of both end faces of the at least one squeegee roll is smaller than an area of a cross-section that is perpendicular to the axial direction of the squeegee roll and that passes through a center in the axial direction of the squeegee roll.

9. The production apparatus of an electrode active material layer according to claim 1, wherein each of both end portions of the at least one squeegee roll has a depression.

10. The production apparatus of an electrode active material layer according to claim 1, wherein a distance between main surfaces of the stock guides that are disposed at both end portions in a longitudinal direction of the squeegee device is larger than a width of the support unit, the main surfaces being opposite to main surfaces that face the squeegee roll.

11. The production apparatus of an electrode active material layer according to claim 1, further comprising position measurement units fixed to the respective stock guides, a gap amount adjustment unit, and a control unit, wherein:
each of the stock guides has a first surface facing the support unit;
the position measurement unit is capable of measuring a distance D1 between the position measurement unit and a surface that faces the first surface of the stock guide and to which the granulated particles are fed;
the gap amount adjustment unit adjusts a gap amount G1 between the first surface of the stock guide and the surface to which the granulated particles are fed; and
the control unit causes the gap amount adjustment unit to adjust the gap amount G1 based on a difference between the gap amount G1 obtained based on the distance D1 and a gap amount threshold T1 that has been set to be greater than 0 µm.
